Europäisches Patentamt

European Patent Office

Office européen des brevets

(11) Veröffentlichungsnummer: **0 197 313 B1**

(12) **EUROPÄISCHE PATENTSCHRIFT**

(45) Veröffentlichungstag der Patentschrift: **29.01.92**

(51) Int. Cl.⁵: **H04M 3/50**, G06F 3/16

(21) Anmeldenummer: **86103025.2**

(22) Anmeldetag: **07.03.86**

(54) **Verfahren zur Speicherung von für einen Teilnehmer eines Kommunikationssystems bestimmte Sprachmitteilungen in einer zentralen Speichereinheit.**

(30) Priorität: **04.04.85 DE 3512401**

(43) Veröffentlichungstag der Anmeldung:
**15.10.86 Patentblatt 86/42**

(45) Bekanntmachung des Hinweises auf die
Patenterteilung:
**29.01.92 Patentblatt 92/05**

(84) Benannte Vertragsstaaten:
**AT BE CH FR GB LI NL SE**

(56) Entgegenhaltungen:
**WO-A-80/01349**
**US-A- 3 906 484**

**PATENT ABSTRACTS OF JAPAN, Band 9 Nr.
56 (E-302)[1779], 12. März 1985; & JP-A-59 194
551**

**REVIEW OF THE ELECTRICAL COMMUNICA-
TION LABORATORIES, Band 32, Nr. 6, November 1984, Seiten 1010-1018, Tokyo, JP; I.
NISHIKADO et al.: "Voice storage system for
centralized extension system"**

(73) Patentinhaber: **SIEMENS AKTIENGESELL-
SCHAFT**
**Wittelsbacherplatz 2**
**W-8000 München 2(DE)**

(72) Erfinder: **Jensen, Peter-Grauer**
**Starupvej 225**
**DK-08340 Malling(DK)**

## Beschreibung

Die Erfindung betrifft ein Verfahren zur Speicherung von für einen Teilnehmer eines Kommunikationssystems bestimmten Sprachmitteilungen in einer zentralen Speichereinheit nach dem Oberbegriff des Patentanspruchs 1.

Moderne Kommunikationssysteme eröffnen eine Vielzahl von neuen Möglichkeiten bei der Benutzung des Telefons. Hierzu gehört beispielsweise die zeitversetzte Übermittlung von Sprachinformationen, die jeweils in einem bestimmten, einem Teilnehmer fest zugeordneten Speicherbereich einer zentralen Speichereinheit hinterlegt werden können (WO-A-80/01 349). Die Sprachspeicherung und die verwaltete Übermittlung der individuellen Informationen kann sowohl im öffentlichen Telefonnetz als auch in Nebenstellenkommunikationssystemen realisiert werden. Die Mitteilungen können von dem jeweils Berechtigten abgerufen werden. Neben dem Aufsprechen dieser Mitteilungen durch den Absender und dem Anhören durch den jeweiligen Empfänger ist es auch möglich, die Mitteilungen zu editieren. So kann beispielsweise beim Herstellen der Mitteilung der Absender diese löschen oder korrigieren. Der Empfänger kann die für ihn bestimmte Information in Teilen oder auch mehrmals anhören. Bei der digitalen Sprachspeicherung wird zur Verringerung des dafür notwendigen Speicheraufwandes eine Vorverarbeitung des PCM-codierten Sprachsignals vorgenommen. Damit wird auf unterschiedlicher Weise eine Reduzierung der Datenrate erreicht. Ein bekanntes Verfahren ist beispielsweise das sogenannte adaptive Differenz-PCM-Verfahren. Eine weitere Reduzierung des zur digitalen Sprachabspeicherung benötigten Speicherbedarfes ist dadurch möglich, daß die Sprachpausen, die in den einzuspeichernden Sprachnachrichten enthalten sind, eliminiert werden. Der Beginn und die Dauer einer solchen Sprachpause werden in codierter Form gespeichert. Diese Pausen lassen sich dann bei der Sprachausgabe eindeutig an der jeweiligen Ausgabeleitung regenerieren. Bedingt durch die Komprimierung der Sprachinformationen entsteht kein kontinuierlicher Datenstrom.

Aus der eingangs schon erwähnten internationalen Anmeldung WO-A-80/01 349 ist ein Nachrichtenspeichersystem bekannt, das mit einer Vielzahl von Telefonvermittlungseinrichtungen in Verbindung steht. Dabei werden Steuersignale und Sprachnachrichten dem Nachrichtenspeichersystem in analoger Form zugeführt und in Digitalsignale umgewandelt. Aus der Zeitschrift 418 "Review of the Electrical Communication Laboratories", Vol. 32 (1984), November, No. 6, Seiten 1010-1018, Tokyo, Japan, I. NISHIKADO et al., "Voice Storage System for Centralized Extension System", ist ebenfalls ein System zur Abspeicherung von Sprachnachrichten bekannt. Bei dem bekannten System ist ebenfalls vorgesehen, daß Sprach- und Steuerdaten verarbeitet werden. Für die Steuerdaten ist eine besondere Schnittstellenschaltung vorgesehen.

Es ist die Aufgabe der Erfindung, ohne besondere Schnittstellen vorsehen zu müssen, bei einem Verfahren der eingangs genannten Art die Informationsübertragung von der Verarbeitungseinheit zu der Speichereinheit zu ermöglichen.

Diese Aufgabe wird erfindungsgemäß mit den Merkmalen des Patentanspruchs 1 gelöst.

Durch die erfindungsgemäße Ausgestaltung des neugebildeten Informationswortes ist für seine Übermittlung zu der Speichereinheit kein eigener Takt zur Verfügung zu stellen. Es kann für die asynchronen Operationen das für den synchronen Betrieb angewendete Taktraster beibehalten werden. Demzufolge ist auch keine speziell ausgebildete Speichereinheit erforderlich. Die Anzahl der insgesamten für die Übertragung notwendigen Signalleitungen ist gering.

Gemäß einer Weiterbildung der Erfindung wird nur der Nutzteil eines jeden Informationswortes in der Speichereinheit abgespeichert. Es werden diese Nutzteile bei einem Abruf der gespeicherten Sprachmitteilung jeweils auf Anforderung derjenigen Verarbeitungseinheit, in der die Nutzteile in die darin enthaltenen Einzelabtastwerte zurückgeführt werden, übermittelt. In gleicher Weise wie bei den vorherigen Einspeichervorgang wird vor dieser Übermittlung eine Ergänzung des Nutzteiles durch ein Startbit und durch Stopbits vorgenommen.

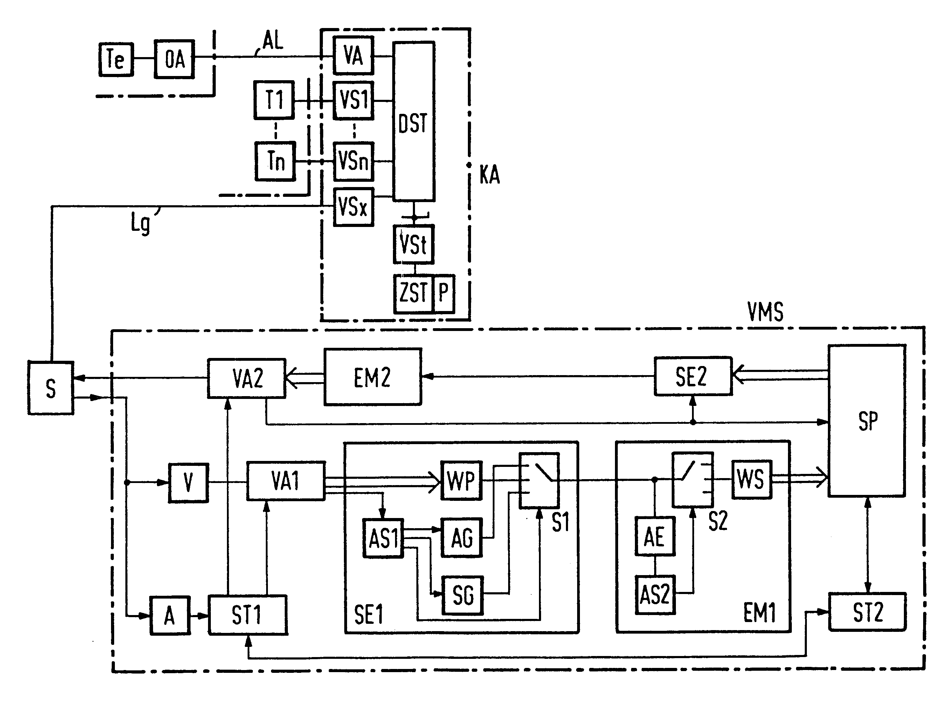

Das erfindungsgemäße Verfahren wird anhand der Figur dargestellt. Es sind in einem vereinfachten Blockschaltbild nur die zum Verständnis erforderlichen Einzelheiten gezeigt. Die Nebenstellen-Kommunikationsanlage KA ist mit einer der Bearbeitung und Abspeicherung von Sprachinformationen dienenden Einheit VMS gekoppelt, bei der das erfindungsgemäße Verfahren zur Anwendung kommt.

Die Anlage KA kann beispielsweise eine rechnergesteuerte speicherprogrammierte Vermittlungsanlage sein. Die zentrale Steuereinrichtung ZST steuert im wesentlichen die für die einzelnen Betriebsmöglichkeiten der Anlage erforderlichen Abläufe. Dabei greift sie auf entsprechende Programmteile zurück, die in der ihr zugeordneten Speichereinrichtung P abgespeichert sind. Mit VSt ist eine Verteilersteuerung und mit DST eine dezentrale Steuerung, der jeweils eine bestimmte Anzahl von Einrichtungen, wie beispielsweise Teilnehmerstellen T1 bis Tn zugeordnet sind, bezeichnet. Unter der Voraussetzung eines digitalen Vermittlungssystems ist diese dezentrale Teilsteuerung DST funktionsmäßig ein rechnergesteuerter Speicherbereich, in dem die digitalen Sprachsignale eingespeichert und zum jeweiligen Verbindungspartner ausgelesen werden. Sie stellt also das digitale Koppelnetz dar. Die Einheit VST ist eine spezielle Verteiler- und Anpassungssteuerung, um mehrere dezentrale Teilsteuerungen DST, an die jeweils Sätze angekoppelt sind, bedienen zu können. So erfolgt beispielsweise die Anschaltung der Teilnehmerstellen T1 bis Tn über die Sätze VS1 bis VSn. Über ein Amtsleitungsbündel bzw. über eine Amtsleitung AL ist die Anlage KA mit einer externen Anlage, beispielsweise mit der Vermittlungsanlage oA des öffentlichen Netzes verbunden. Stellvertretend für die daran angeschlossenen Endgeräte ist als Endgerät die Teilnehmerstelle Te dargestellt. Der weiterführenden Leitung AL ist ein Vermittlungssatz VA zugeordnet. Es ist nun vorgesehen, daß sowohl Sprachinformationen, die in digitaler Form übermittelt werden, als auch solche, die als analoge Sprachinformationen vorliegen in einem Sprachspeichersystem VMS, das über einen entsprechenden Satz VSx an die Vermittlungsanlage KA angeschlossen ist, verarbeitet werden. In einer Speichereinrichtung SP werden Sprachmitteilungen, die für einen bestimmten Teilnehmer erfolgen, abgespeichert. Dieser Teilnehmer hat dann die Möglichkeit die Mitteilung gezielt abzufragen. Sowohl beim Erstellen einer Nachricht als auch beim Abhören derselben stehen dem Teilnehmer verschiedene Bedienfunktionen zur Verfügung. Hierzu gehören beispielsweise Start/Stop der Ein- bzw. Ausgabe, Wiederholung der Nachricht, Vorlauf/Rücklauf sowie das Löschen und Ändern einer Nachricht. Eine solche Sprachmitteilung kann durch weitere Informationen, wie beispielsweise die Identität des Absenders, den Zeitpunkt des Absendens usw. ergänzt sein. Sind im Speicher SP Nachrichten für einen Teilnehmer eingetroffen, so kann ihm dies signalisiert werden. Für diese neue zeitversetzte Art der Kommunikation, die eine zentrale Sprachspeicherung und die verwaltete Übermittlung der Sprachmitteilungen ermöglicht, kann als Endgerät der vorhandene Fernsprechapparat verwendet werden.

Die über die Leitungsverbindung Lg, die mehrere Kanäle beinhaltet, ankommenden Sprach- bzw. Steuerinformationen sollen als PCM-codierte Signalfolgen anliegen. Über die zur Anpassung vorhandene Schnittstelle S werden die Signalfolgen einer Auswerteeinheit A zugeführt. Diese Einheit kann Steuerinformationen, die im Informationsfluß auf Grund der vom Teilnehmehmer signalisierten Bedienwünsche auftreten, erkennen. Derartige Steuerinformationen werden besispielsweise als im sogenannten Mehrfrequenzverfahren abgegebene MFV-Zeichen übermittelt. Das jeweilige Auswerteergebnis wird der Steuereinheit ST1, die ihrerseits mit der die Einsprechervorgänge steuernden Steuereinheit ST2 im Informationsaustausch steht, übermittelt. Die Eingangssignalfolge wird weiterhin nach einer kurzen, mit einer Einheit V bewirkten Verzögerungszeit der Verarbeitungseinrichtung VA1 zur Verfügung gestellt. Die Verzögerungszeit ist so bemessen, daß sie mindestens derjenigen Zeitspanne, in der die Auswerteeinheit A eine Steuerinformation erkennen kann, entspricht. Ist nämlich eine solche Steuerinformation vorhanden, so wird ihre Einspeicherung in die Speichereinrichtung SP auf Grund einer von der Steuereinheit ST1 zu der Verarbeitungseinheit VA1 übertragenen Information verhindert. Durch die verzögerte Weitergabe der Eingangsinformationen an die Verarbeitungseinheit VA1 wird somit erreicht, daß nur Sprachinformationen an die nachgeschalteten Einheiten weitergegeben werden. Um Speicherplatz einzusparen wird nicht jeder eine Sprachinformation betreffende Abtastwert in der Speichereinrichtung SP hinterlegt, sondern es wird in der Verarbeitungseinheit VA1 u.a.eine Komprimierung vorgenommen. Ein solches Vorverarbeitungsverfahren ist beispielsweise das sogenannte adaptive Differenz-PCM-Verfahren (ADPCM). Es wird dabei grundsätzlich die Differenz zweier aufeinander folgende Abtastwerte kodiert. Hierzu werden im wesentlichen weniger Binärwertzeichen als bei der normalen Kodierung benötigt. Dadurch, daß weiterhin die Quantisierungsstufen dynamisch dem jeweiligen Durchschnittspegel angepaßt werden, wird eine weitere Bitratenreduzierung erreicht. Die dabei entstehenden Daten werden zusätzlich noch zu bei der Pulscodemodulation üblichen PCM-Worten,von z.B. 8 Bit Breite, verpackt.

Durch Kodierung von Sprachpausen kann eine weitere Reduzierung des zur Sprachabspeicherung benötigten Speicherbedarfes erfolgen. Sprachpausen beliebiger Länge können durch einen Sprachpausencode mit entsprechender Pausenlängenangabe eindeutig aus der betreffenden Speichereinheit SP an der jeweiligen Ausgabeleitung regeneriert werden. Die entsprechende Sprachpausenkodierung soll ebenfalls von der Verarbeitungseinheit VA1 durchgeführt werden. Zu diesem Zweck ist ein Sprachschalter vorhanden, der durch Überprüfung verschiedener Schwellwerte bei jedem Abtastwert Sprachinformationen erkennt. Während einer Sprachpause werden keine Daten kodiert, sondern es wird die Länge der Pause ermittelt und anschließend kodiert ausgegeben.

Die Komprimierung der Sprachinformation und die bei der Kodierung der Sprachpausen entstehenden Daten ergeben keinen kontinuierlichen Nutzdatenstrom. Es werden deshalb die von der Verarbeitungseinheit VA1 gelieferten Verarbeitungsergebnisse im sogenannten Asynchron-Übertragungsverfahren zu der Speichereinrichtung SP bzw. zu der ihr vorgeordneten Empfangseinrichtung EM1 übertragen. Hierzu wird in der Sendeeinheit SE1 das beispielsweise nach der beschriebenen Verpackung der reduzierten Abtastwerte entstandene Wort zu einem neuen Informationswort in der Weise zusammengefaßt, daß einStartbit vorangesetzt und mit Stopbits abgeschlossen wird. Ein solches vorangestelltes Startbit kann beispielsweise als binäre Null und ein Stopbit als binäre 1 definiert sein. Die Verarbeitungseinheit VA1 kann also immer dann ein neues Wort abgeben, wenn die für die jeweilige Wortbildung notwendigen Daten vorliegen. Im Ausführungsbeispiel sind in den Fällen, in denen die Kopplung mit den nachfolgenden Einheiten über Leitungsanordnungen erfolgt, die aus einer der Anzahl der Bits entsprechenden Anzahl von Einzelleitungen bestehen, diese Leitungsanordnungen durch zueinander parallele Verbindungslinien dargestellt. Die aufgrund der Sprachkomprimierung und der zusätzlichen Verpackung in ein übliches 8-Bitwort entstehenden Ausgangsinformationen der Verarbeitungseinheit VA1 werden beispielsweise in dieser parallelen Form abgegeben. In der Sendeeinheit SE1 erfolgt durch die Einheit WP ihre Umwandlung in eine serielle Darstellungsform. Die Sendeeinheit SE1 wird durch die von der Verarbeitungseinheit VA1 ausgehenden Aktivierung der Ablaufsteuerung AS1 wirksam. Diese Ablaufsteuerung steuert den in vereinfachter Weise dargestellten elektronischen Schalter S1, sowie den das Startbit liefernden Generator AG und den die Stopbits liefernden Generator SG. Soll im Rahmen der asynchronen Übertragung eine Information abgegeben werden, so wird durch die entsprechende Stellung des Schalters S1 zunächst ein Startbit abgegeben. Danach schaltet der elektronische Schalter S1 auf den Ausgang der Einheit WP und verbleibt in dieser Stellung bis beispielsweise alle acht Bit der in der beschriebenen Weise neu gebildeten Information ausgesendet sind. In der sich daran anschliessenden dritten Schalterstellung werden diese acht Nutzbits durch Stopbits ergänzt. Es kann beispielsweise vorgesehen sein, daß insgesamt sieben Stopbits ausgesendet werden, so daß ein Wortformat von insgesamt 16 Bit entsteht. Es wird somit ein Wortformat gebildet, das bei der Verarbeitung der Signalprozesse aufgrund der internen Struktur den in der Einrichtung VMS verwendeten Steuerrechnereinheiten üblich ist. Obwohl also eine asynchrone Übertragung stattfindet, kann als Taktgrundlage die 64 kBit/s Datenrate beibehalten werden. Da ein derartiger, 16 Takte langer Byterahmen nur dann gesendet wird, wenn auch Daten vorhanden sind, werden in der Zeit, in der dies nicht der Fall ist, die sogenannten Stopbits ausgesendet.

Die in einer Einheit mit synchroner Betriebsweise anfallenden Daten werden also asynchron zu der Empfangseinrichtung EM1 übertragen. Diese ist für die Bewertung eines jeden ausgesendeten Byterahmens sinngemäß auf die Bewertung von einem Startbit, den acht Nutzbits und von mindestens einem Stopbit eingestellt. Wird durch die Detektoreinheit AE ein Startbit erkannt, so wird die Ablaufsteuerung AS2 gestartet. Für das nachfolgende erste der insgesamt acht eintreffenden Informationsbits wird der elektronische Schalter S2, der vereinfacht als mechanischer Schalter symbolisch dargestellt ist, so eingestellt, daß er die Eingangsleitung mit der Einheit WS verbindet. Diese Einheit dient der Wandlung der seriell einlaufenden Informationen in parallel angebotene Ausgangsinformationen. Diese werden dann in Unabhängigkeit von den Steuerbefehlen, die von der Steuereinheit ST2 geliefert werden in der Speichereinrichtung SP eingespeichert. Sprachinformationen werden ggf. ergänzt durch weitere, beispielsweise die Empfangszeit betreffende Informationen in dem für den betreffenden Teilnehmer reservierten Speicherbereich hinterlegt. Dies erfolgt jedoch nur, wenn die zwei ersten der nach den acht Nutzbits eintreffenden Stopbits durch die Detektoreinheit AE als gültig erkannt werden. Die Eingangsleitung wurde nach dem achten Bit des Nutzdatenteils durch entsprechende Betätigung des elektronischen Schalters S2 von der Einheit WS abgetrennt.

Bei der Ausspeicherung einer Sprachnachricht aus der Speichereinrichtung SP werden von dem hierzu berechtigten Teilnehmer zunächst Steuerinformationen übermittelt. Aufgrund von eingewählten Kennzahlen kann sich beispielsweise der betreffende Teilnehmer gegenüber dem Sprachspeichersystem VMS als berechtigt ausweisen oder er kann den Wunsch nah Wiederholung einer Nachricht signalisieren. Diese Steuerinformationen werden von der Einheit A ausgewertet und führen über die Einheit ST1 zu entsprechenden Informationen für die Steuerrechnereinheit ST2. In gleicher Weise, wie dies für den Einspeicherweg geschildert wurde, ist im Ausspeicherungszweig eine Sendeeinheit SE2 und die Empfangseinheit EM2 vorhanden. Ihr Aufbau entspricht grundsätzlich dem für die Sendeeinheit SE1 und für die Empfangseinheit EM1 dargestellten Aufbau. Die abzugebende Nutzinformation wird für die Übertragung zu der Empfangseinheit EM2 in der Sendeeinheit SE2 gleichfalls durch ein Startbit und durch Stopbits ergänzt. Sie werden trotz der für die Speichereinrichtung vorgesehenen synchronen Arbeitsweise zu der Einheit EM2 asynchron übertragen. Jeder Byterahmen wird jedoch von der Verarbeitungseinheit VA2 durch Aussenden eines besonderen Anforderunssignals aus der Speichereinrichtung angefordert. Die minimalste Zeit zwischen zwei derartigen Anforderungssignalen entspricht wegen der zu verarbeitenden 16 Bit-Wortbreite demnach mindestens 16 Taktzeiten. In der Verarbeitungseinheit VA2 werden die in komprimierter Form dargestellten und auf acht Bit-Informationen verpackten und in paralleler Darstellung angebotenen Daten in normal codierte PCM-Informationen umgewandelt. Bevor die Informationen über die Schnittstelle S unter Einbeziehung der Vermittlungsanlage KA zu einer Teilnehmerstelle, beispielsweise zu der Teilnehmerstelle T1, übertragen werden, kann noch eine Umwandlung der in paralleler Form abgegebenen digitalen Informationen in seriell auftretende digitale Informationen vorgenommen werden. Wurden die im Anschluß an Sprachinformationen vorhandenen Sprachpausen abgespeichert, so werden diese bei der Ausspeicherung der Sprachinformationen wieder ohne Veränderung der Sprachcharakteristik hinzugefügt.

## Patentansprüche

1. Verfahren zur Speicherung von für einen Teilnehmer eines Kommunikationssystems (KA), insbesondere eines Nebenstellenkommunikationssystems, bestimmten Sprachmitteilungen in einer über eine entsprechende Endeinrichtung (T1...Tn) erreichbaren zentralen Speichereinheit (SP) von der diese Sprachmitteilungen von dem betreffenden Teilnehmer abrufbar sind, wobei diese Sprachmitteilungen im Rahmen synchroner Betriebsabläufe als aus Abtastwerten gewonnene pulscodemodulierte Datenworte dargestellt sind, für die zum Zwecke der Bitratenreduzierung vor der Einspeicherung eine Vorverarbeitung erfolgt, bei der jeweils mehrere Abtastwerte zu einem neuen Informationswort zusammengefaßt werden, **dadurch gekennzeichnet,** daß eine asynchrone Übertragung dieser Informationsworte zu der Speichereinheit (SP) erfolgt, daß das Informationswort hierzu neben dem Nutzteil ein vorangestelltes Startbit und mindestens ein abschließendes Stopbit enthält und daß dabei für die seriell dargestellten Informationsworte ein in das der Pulscodemodulation zugrundeliegende Taktraster passendes Wortformat erzeugt wird.

2. Verfahren nach Patentanspruch 1, **dadurch gekennzeichnet,** daß der Nutzteil eines jeden Informationswortes in der Speichereinheit (SP) abgespeichert wird und daß bei dem Abruf der gespeicherten Sprachmitteilung der Verarbeitungseinheit (VA2), die jeweils die Nutzteile in die einzelnen Abtastwerte zurückführt, diese Nutzteile jeweils auf ihre Anforderung hin nach ihrer erneuten Ergänzung durch ein Startbit und durch mindestens ein Stopbit übermittelt werden.

## Claims

1. Method for storing voice messages intended for a subscriber of a communication system (KA), in particular a private branch exchange communication system, in a central memory unit (SP) which can be reached via a corresponding terminal device (T1...Tn), from which central memory unit said voice messages can be called up by the subscriber in question, said voice messages being represented during synchronous operational procedures as pulse-code-modulated data words obtained from sampled values for which a preprocessing is carried out for the purpose of bit rate reduction before the storage, in which a plurality of sampled values are combined in each case to form a new information word, characterised in that an asynchronous transmission of these information words to the memory unit (SP) is carried out, in that for this purpose the information word contains in addition to the useful portion a preceding start bit and at least one concluding stop bit, and in that in this arrangement a word format matching the timing pattern on which the pulse code modulation is based is generated for the serially represented information words.

2. Method according to Patent Claim 1, characterised in that the useful portion of each information word is stored in the memory unit (SP), and in that when the stored voice message is called up, the useful portions are in each case transmitted when requested after they have been supplemented once more by a start bit and by at least one stop bit to the processing unit (VA2), which converts these useful portions back into the individual sampled values in each case.

## Revendications

1. Procédé pour mémoriser des communications vocales destinées à un abonné d'un système de communication (KA), notamment d'un système de communication à postes supplémentaires, dans une unité centrale de mémoire (SP), qui peut être atteinte par l'intermédiaire d'un dispositif correspondant (T1...Tn) et à partir de laquelle ces communications vocales peuvent être appelées par l'abonné considéré, et selon lequel ces communications vocales sont représentées, dans le cadre de cycles synchrones de service, sous la forme de mots de données obtenus à partir de valeurs d'échantillonnage et modés selon une modulation par impulsions codées et pour lesquels est exécuté, en vue de réduire la cadence binaire avant la mémorisation, un traitement préalable, lors duquel respectivement plusieurs valeurs d'échantillonnage sont réunies pour former un nouveau mot d'information,
**caractérisé** par le fait
qu'une transmission asynchrone de ces mots d'information est réalisée dans l'unité de mémoire (SP), qu'à cet effet, le mot d'information contient, en dehors de la partie utile, un bit précédent de démarrage et au moins un bit final d'arrêt, et qu'un format de mot, qui s'insère dans la trame de cadence sur laquelle est basée la modulation par impulsions codées, est produit pour les mots d'information représentés en série.

2. Procédé suivant la revendication 1, caractérisé par le fait
que la partie utile de chaque mot d'information est mémorisée dans l'unité de mémoire (SP) et que, lors de l'appel de la communication vocale mémorisée, de l'unité de traitement (VA2), qui renvoie respectivement les parties utiles dans les différentes valeurs d'échantillonnage, ces parties utiles sont retransmises respectivement sur leur demande, lors de leur demande, après avoir été à nouveau complétées par un bit de démarrage et par au moins un bit d'arrêt.